# EUROPEAN PATENT APPLICATION

(11) **EP 1 039 454 A1**
(43) Date of publication of application: **27.09.2000**
(21) Application number: 99400675.7
(22) Date of filing: 19.03.1999
(51) Int. Cl.: G11B 7/09

(54) **Lens holder with a coil in a cavity thereof for use in an actuator**

(71) Applicant: DEUTSCHE THOMSON-BRANDT GMBH, 78048 Villingen-Schwenningen (DE)
(72) Inventor: Kaaden, Jürgen, Thomson Multimedia Licensing & IP, 92648 Boulogne Billancourt (FR); Mahr, Peter, Thomson Multimedia Licensing & IP, 92648 Boulogne Billancourt (FR); Oldermann, Klaus Thomson Multimedia Licensing & IP, 92648 Boulogne Billancourt (FR); Uhde, Dietmar, Thomson Multimedia Licens. & IP, 92648 Boulogne Billancourt (FR)
(74) Representative: Zhang, Jianguo

(57) **Abstract**

An optical pick up as used for example in an optical disk player comprises a lens holder, a body (15) of which may support a lens (8). The body is moved in an externally applied magnetic field using a coil (20) rigidly fixed to the body. The movement occurs when a current flows in the coil. The body comprises a cavity (18) delimited by a cavity wall (19). The coil is fitted inside the cavity such that a whole circumference of the coil is in contact with the cavity wall. The coil body assembly shows an improved stiffness which allows to move the lens holder at relatively high frequencies.

## Description

The present invention relates to an optical pickup. Such a pickup may for example be used to read and/or write on an information storage medium in a player and/or recording device.

Optical pickups are of widespread use in optical and magneto-optical player and/or recording devices. Optical pickups are used to position a light spot on a precise location of the information storage medium. The information storage medium may for example carry or be designed to carry data along a data track. In this case a light spot is positioned relatively to the data track in order that data may be read or written. More precisely the light spot is obtained by focusing a light beam with a lens. The lens may be fixed on a lens holder used in the optical pickup. The lens holder is movable relative to the data track. It may be moved in a predetermined direction in order to focus the light spot or in a further predetermined direction, for example sideways to the data track in order to perform tracking, i.e., keep the light spot on the data track.

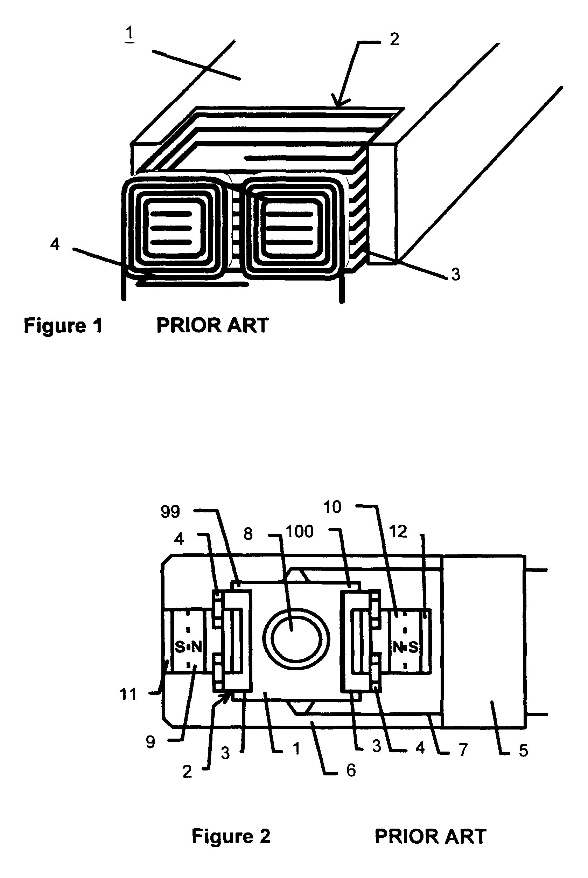

It is known to move the lens holder using at least one coil fixed to the lens holder. Referring to Figure 1 an extremity of a lens holder 1 as known from prior art is ended by a C-shaped recess 2. A part of an air coned focus coil 3 is rigidly fixed in the C-shaped recess 2.

The air coned focus coil 3 may be fixed using for example glue. A complementary part of the air coned focus coil 3 which is not fixed directly to the C-shaped recess 2 extends the extremity of the lens holder 1. An air coned tracking coil 4 is fixed on the complementary part of the air coned focus coil 3 using for example glue.

Referring to Figure 2 the lens holder 1 is shown in a top view together with an actuator construction which is part of an optical pickup (not shown). The actuator construction comprises an actuator holder 5 mounted on an actuator plate 6. The lens holder 1 is attached to the actuator holder 5 by means of a suspension device 7, e.g., elastical metal wires or plastic hinges. A lens 8 is mounted to the lens holder 1. The lens holder 1 in ended at a first extremity 99 and at a second extremity 100 by the C-shaped recess 2 and a further C-shaped recess respectively. An assembly of air coned focus and tracking coils 3 and 4 similar to what is described in relation to Figure 1 is fixed in each C-shaped recess. The lens holder 1 is located between two magnets 9 and 10 mounted on return closings 11 and 12 such that both magnets show a same pole to the lens holder 1, for example a north pole N as shown in Figure 2.

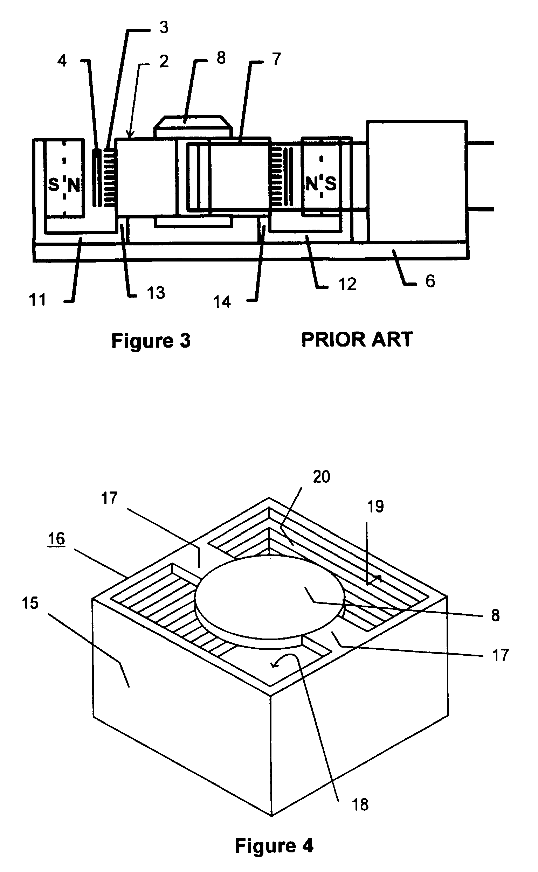

Referring to Figure 3 the lens holder 1 and the actuator construction are shown in a side view. Two branches 13 and 14 of the return closings 11 and 12 are oriented perpendicular to the actuator plate 6. The suspension device 7 allows the lens holder to move along the branches 13 and 14 which are surrounded by the focus coils 3. A movement towards or away from the actuator plate 6 may be obtained by applying a current to the focus coils 3 to current source is shown in Figure 3. A movement parallel to the actuator plate 6 may be obtained by applying a current to the tracking coil 4. Hence the lens 8 may be positioned in directions toward, away and/or parallel to the actuator plate 6. The positioning of the lens 8 is in practice done at frequencies which range for example from DC to 25 kHz. The frequencies are intimately related to a rate at which data is to be read and/or written. The higher the rate the faster the response of the positioning must be and thus the greater the frequencies become. Due to mechanical properties of the lens holder 1, suspension means 7 and actuator construction assembly there appear to be resonance frequencies at higher frequencies in the range, i.e. resonance frequencies for whichit becomes difficult to achieve a reliable positioning of the lens 8. This is for one part caused by the way the focus coils 3 are fixed in the C-shaped recesses 2, since the complementary part of the focus coils 3 which are not in the C-shaped recesses may tend to vibrate relatively to the lens holder, i.e., the focus coils 3 and lens holder 1 assembly has a lack of stiffness. This lack of stiffness becomes even more apparent due to the fact that the tracking coils 4 are fixed on the focus coils 3. A force created by the tracking coils 4 when a current is applied to them moves the lens holder by creating a force on the focus coils 3. This force is transmitted mechanically to the lens holder because the focus coils 3 are fixed to the lens holder. However the complementary part of the focus coils 3 has elastical properties which cause the lack of stiffness.

One solution to improve the stiffness of a lens holder and focus coil assembly is known from prior art and implies winding a focus coil around a circumference of the lens holder. However this solution requires to use a specific machinery to wind wires around the lens holder.

It is an object of the present invention to improve the lens holder focus coil assembly while continuing to use air coned coils which are particularly convenient to manufacture.

A first solution according to the invention foresees a lens holder for use in an optical pickup head which comprises at least a body which may support a lens and an air coned coil rigidly fixed to the body which is used to move the body in a predetermined direction in an externally applied magnetic field when a current flows in the coil. The body comprises a cavity delimited by a cavity wall and the air coned coil is fitted inside the cavity such that a whole circumference of the air coned coil is in contact with the cavity wall.

An advantage of the invention is that the air coned coil which performs for example the same as the focus coil is now fixed as a whole to the body and as such the assembly presents an improved stiffness as compared with prior art. Hence higher frequencies may be achieved resulting in higher reading and/or writing rates.

In a first preferred embodiment of the lens holder the body is a substantially rectangular shaped frame having two lateral walls which are opposite to each other and intended to be exposed perpendicularly to the externally applied magnetic field.

In a second preferred embodiment at least a further air coned coil is fixed on a part of the body distinct from the cavity. The further air coned coil is used to move the body in a further predetermined direction secant to the predetermined direction when a current flows in it.

In a third preferred embodiment the further air coned coil is bent such that it is partially used to move the body when a current flows in the air coned coil.

In a fourth preferred embodiment the further air coned coil is at least partially fixed on one of the two lateral walls.

A second solution according to the invention foresees an actuator assembly comprising two magnets mounted each on a return closing, each return closing being U-shaped and having a branch opposite to the magnet and a suspension means. The actuator asembly further comprises a lens holder which comprises a cavity delimited by a cavity wall and an air coned coil fitted inside the cavity such that a whole circumference of the air coned coil is in contact with the cavity wall. The lens holder is attached in the actuator assembly using the suspension means such that each of the branches opposite to the magnet are located inside the cavity of the body.

In a fourth preferred embodiment the branches opposite to the magnet are joined to each other such that same magnetic poles of the magnet face each other through the branches.

In a fifth preferred embodiment the body comprises a lens holder plate which supports the lens and is attached to the suspension means, the lens holder plate having an opening through which one of the magnets may be inserted such that the lens and the body face different magnetic poles of the magnet.

Still another solution according to the invention foresees an optical disk player for reading and/or writing data on an optical data carrier which comprises a lens holder as described above in the first solution or in the first to third preferred embodiment.

In a sixth preferred embodiment of the holder according to the invention the air coned coil in completely covered in a material.

The invention will in the following be explained using detailled non limitative example and Figures 1 to 14 wherein :
Figure 1 schematically shows a lens holder with coils according to prior art,
Figure 2 shows a top view of an actuator assembly according to prior art,
Figure 3 shows a side view of the actuator assembly according to prior art,
Figure 4 shows a lens holder body with an air coned coil,
Figure 5 shows a preferred embodiment of the lens holder body with further air coned coils,
Figure 6 shows a further preferred embodiment of the lens holder body with air coned coils,
Figure 7 shows an actuator assembly comprising a lens holder body and air coned coils in a top view,
Figure 8 shows a bottom view of the lens holder body with air coned coils from Figure 7,
Figure 9 contains an illustration explaining how the lens holder body may move in a first direction,
Figure 10 contains an illustration explaining how the lens holder body may move in a second direction,
Figure 11 shows a preferred embodiment of an actuator assembly including a lens holder body in a top view,
Figure 12 shows a side view of the preferred embodiment of the actuator assembly including the lens holder,
Figure 13 shows a still further preferred embodiment of a lens holder with an air coned coil in a top view,
Figure 14 shows another preferred embodiment of a lens holder with an air coned coil in a top view.

All along the description same rererences will be used to designated same elements.

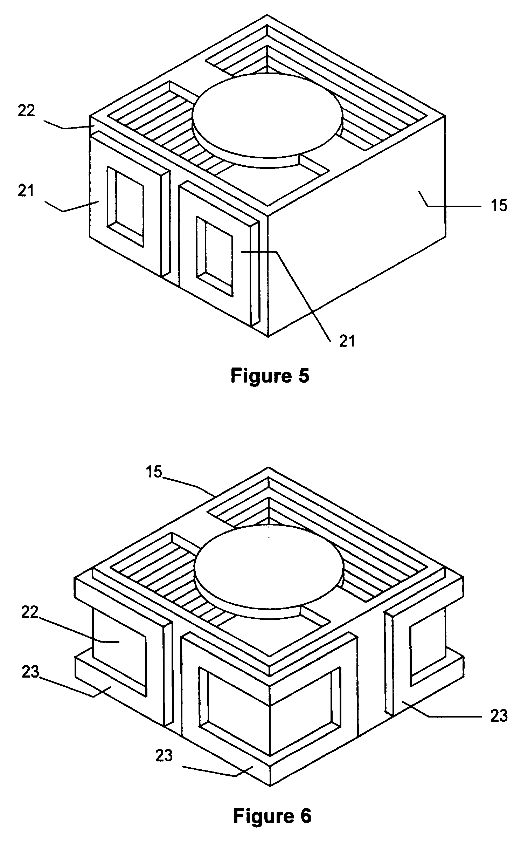

Figure 4 shows a body 15 of a lens holder 16 according to the invention. The body 15 comprises lateral fixing means 17 used to fix the lens 8. The body 15 may for example have a rectangular shaped frame which defines a cavity 18 delimited by a lateral cavity wall 19. In the represented body 15, the cavity wall has a rectangular frame shape as well. An air coned coil 20 is fitted inside the cavity 18 such that its circumference is in contact with the lateral cavity wall 19. Hence the air coned coil 20 takes a same rectangular frame shape as the cavity wall 19 of the cavity 18. The circumference may for example be glued to the lateral cavity wall 19. Since the whole circumference of the air coned coil is fixed it results in an improved stiffness of the coil body assembly.

Figure 5 shows further air coned coils 21 fixed on a lateral surface 22 of the body 15. Such air coned coils may also be fixed on a lateral surface opposite to the lateral surface 22 but not visible in Figure 5.

Figure 6 shows bent air coned coils 23 fixed on all lateral wall surfaces of the body 15. Each bent air coned coil 23 is in contact with two adjacent lateral surfaces. This results in that for example the lateral surface 22 carries parts of two bent air coned coils 23.

Typically the air coned coil 20 shown in Figure 4 is also present in Figures 5 and 6 and is used as a focus coil for positioning the body 15 in an actuator assembly as will be explained hereunder. The further and bent air coned coils 21 and 23 from Figures 5 and 6 may for example be used as tracking coils for positioning the body 15 in an actuator assembly. The fact that the further and bent air coned coils are fixed directly to the body 15 confers an improved stiffness to the coil body assembly.

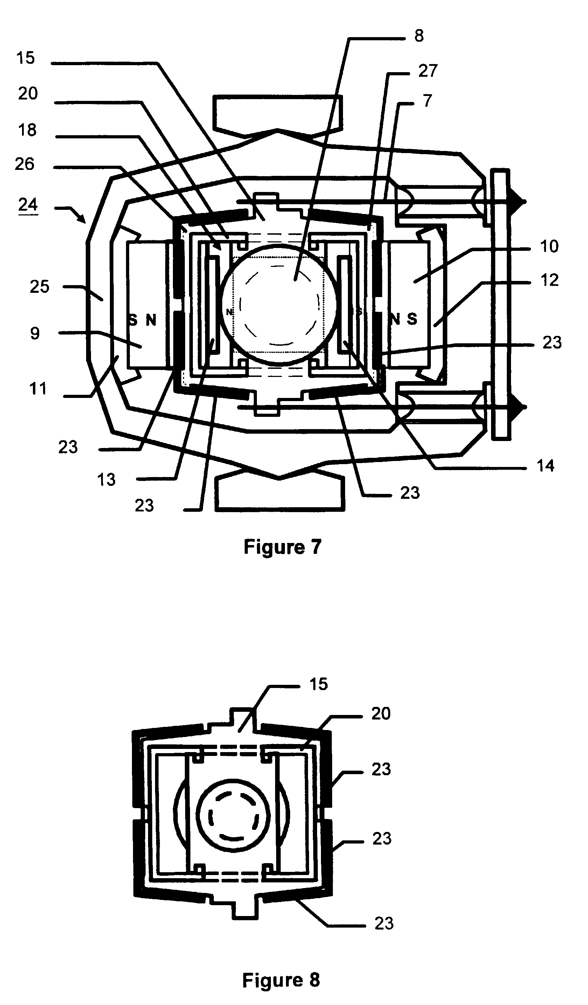

Figure 7 represents a top view of an actuator assembly 24. A body 15 holding a lens 8 is attached to an actuator frame 25 using a suspension device 7. Return closings 11 and 12 have magnets 9 and 10 mounted on a branch of each return closing 11 and 12. The branches 13 and 14 of the return closings 11 and 12 penetrate in the cavity 18 such that two opposite lateral walls 26 and 27 are respectively located between the north pole N of magnets 9 and 10 and the branch 13 and 14. This configuration allows a relatively large proportion of the air coned coil 20 and of the bent air coned coils 23 (represented in dark gray) to be exposed to the magnetic field created between each magnet 9 and 10, and the branches 13 and 14 respectively.

Figure 8 represents a bottom view of the body 15 from Figure 7 including the air coned coil 20 and the bent air coned coils 23.

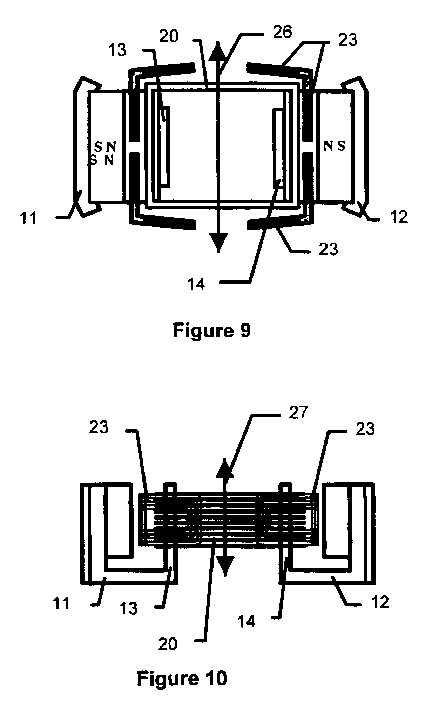

A double arrow illustrates a tracking movement 26 in Figure 9 which may be achieved by the body (not represented) relative to the return closings 11 and 12. For reasons of simplicity and better readability the air coned coil 20 and the bent air coned coils 23 have been represented without the body. The forces to perform the tracking movement 26 are obtained when an appropriate current is applied and flows through the bent air coned coils 23, such that an interaction with the magnetic fields generated between the poles N and the branches 13 and 14 occurs. In this extend the bent air coned coils 23 are only partially used, i.e., only a part of the coil actually contributes to obtain the force.

A further double arrow illustrates a focusing movement 27 in Figure 10 which may be achieved by the body (not represented) relative to the return closing 11s and 12. For reasons of simplicity and better readability, the air coned coil 20 and the bent air coned coils 23 have been represented without the body. The forces to perform the focussing movement 27 are obtained when an appropriate current is applied and flows through the air coned coil 20, such that an interaction with the magnetic fields generated between the magnets and the branches 13 and 14 occurs.

When the lens holder according to the invention and shown in the examples related to Figures 4 to 10 is used in an actuator assembly it is possible to improve resonance characteristics of the assembly as compared to prior art and achieve positioning frequencies of at least 35 to 40 kHz. This is due to a stiffness achieved by fixing the air coned coils directly to the body 15 according to the invention.

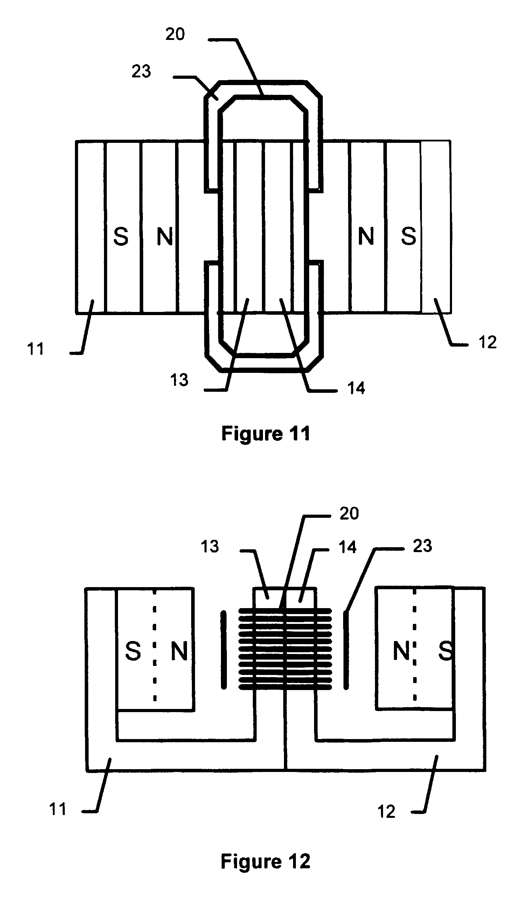

Figures 11 and 12 represent a top and side view respectively of an embodiment of the body which is schematically represented using the coils 20 and 23 and allows a more compact magnet and return closing assembly. The branches 13 and 14 of the return closings 11 and 12 are joined together. This embodiment increases the ratio between the length of the focus coils parts located in front of the north poles N and the length of the focus coil parts perpendicular to the former parts. The latter parts do not contribute to generating forces for focusing movement because the current flowing in them is parallel to the magnetic fields. Since the air coned coil and the body size are reduced a reduction of weight also results and a more effective use of current and magnetic fields is achieved.

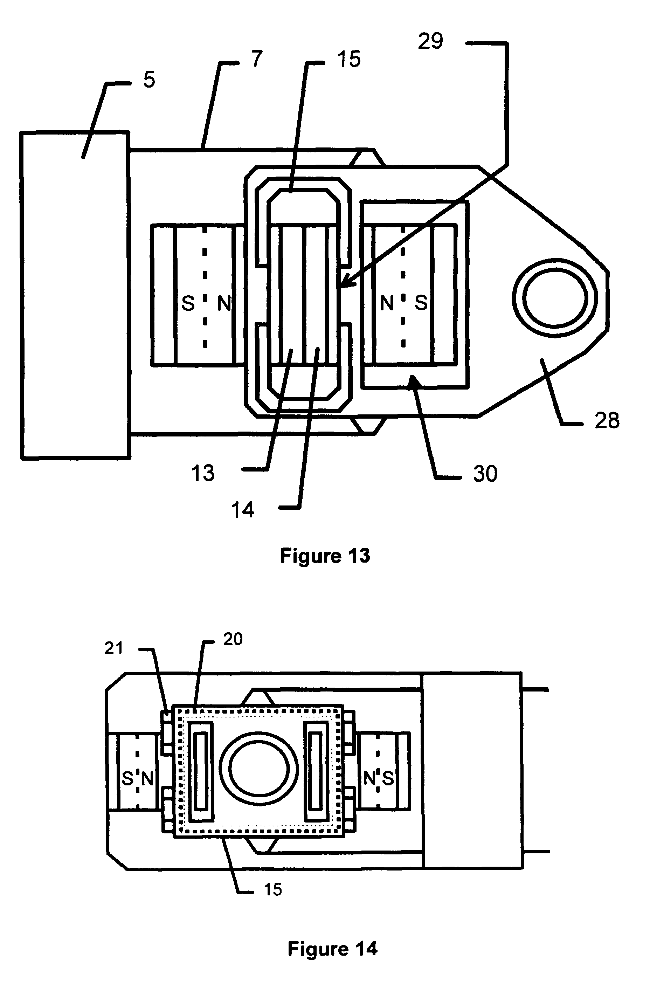

Figure 13 represents a top view of a body 15 and lens holder plate 28 which is integral with the body 15 and extends away from a lateral wall 29 of the body 15. The body is allowed to move around the branches 13 and 14 of the return closings by suspension means 7 which attach the lens holder plate 28 to the actuator holder 5. The lens holder plate has an opening 30 through which a magnet and a branch of the return closing to which it is mounted is inserted.

A further preferred embodiment shown in figure 14 foresees to completely cover the air coned coil 20 from inside the cavity with a material. This material could for example be a same material which constitutes the body 15. The air coned coil 20 is represented using dotted lines. The further air coned coils 21 which are used to achieve the tracking movement are fixed on the body 15 on lateral walls facing the north poles N of the magnets. This preferred embodiment allows to achieve an even greater stiffness of the coil body assembly. It may be realized during manufacturing of the body through molding.

The invention may for example be used in Compact Disk or Digital Video Disk players and/or recorders and more specially in players and/or recorders of the digital data carriers known as CD-ROM and DVD-RAM. Other optical disk players and/or recorders may also be considered for the use of the invention.

### LIST OF REFERENCES

1. Lens holder
2. C-shaped recess
3. Air coned focus coil
4. Air coned tracking coil
5. Actuator holder
6. Actuator plate
7. Suspension device
8. Lens
9. Magnet
10. Magnet
99. First extremity
100. Second extremity
11. Return closing
12. Return closing
13. Branch of return closing
14. Branch of return closing
15. Body
16. Lens holder
17. Lateral fixing means
18. Cavity
19. Cavity wall
20. Air coned coil
21. Air coned coil
22. Lateral surface
23. Bent air coned coils
24. Actuator assembly
25. Actuator frame
26. Tracking movement
27. Focusing movement
28. Lens holder plate
29. Lateral wall
30. Opening

## Claims

1. Lens holder for use in an optical pickup head comprising at least:
• a body (15) which may support a lens (8),
• an air coned coil (20) rigidly fixed to the body which is used to move the body in a predetermined direction in an externally applied magnetic field when a current flows in the coil,
characterized in that
the body comprises a cavity (18) delimited by a cavity wall (19) and that the air coned coil is fitted inside the cavity such that a whole circumference of the air coned coil is in contact with the cavity wall.

2. Lens holder according to claim 1, characterized in that the body is a substantially rectangular shaped frame having two lateral walls (22) which are opposite to each other and intended to be exposed perpendicularly to the externally applied magnetic field.

3. Lens holder according to anyone of claims 1 or 2, characterized in that at least a further air coned coil (21, 23) is fixed on a part of the body (22) distinct from the cavity which is used to move the body in a further predetermined direction secant to the predetermined direction when a current flows in the further air coned coil.

4. Lens holder according to claim 3, characterized in that the further air coned coil (23) is bent such that it is partially used to move the body when a current flows in the air coned coil.

5. Lens holder according to anyone of claim 3 or 4, characterized in that the further air oned coil (21, 23) is at least partially fixed on one of the two lateral walls.

6. Lens holder according to anyone of claims 1 to 5, wherein the air coned coil is glued on the cavity wall.

7. Actuator assembly comprising two magnets (9, 10) mounted each on a return closing (11, 12) each return closing being U-shaped and having a branch (13, 14) opposite to the magnet, a suspension means (7) characterized in that it further comprises a lens holder according to anyone of claims 1 to 6, the lens holder being attached in the actuator assembly using the suspension means such that each of the branches 9 opposite to the magnet are located inside the cavity (18) of the body (15).

8. Actuator assembly according to claim 7, characterized in that the branches (13, 14) opposite to the magnets are joined to each other such that same magnetic poles (N) of the magnets face each other through the branches.

9. Actuator assembly according to claim 8, wherein the body (15) comprises a lens holder plate (28) which supports the lens (8) and is attached to the suspension means, the lens holder plate (28) having an opening (30) through which one of the magnets may be inserted, such that the lens (8) and the body (15) face different magnetic poles of the magnet.

10. Optical disk player for reading and/or writing data on an optical data carrier, characterized in that it comprises a lens holder according to anyone of claims 1 to 6.

11. Lens holder according to claim 1 wherein the air coned coil 20 is completely covered in a material.
